# EUROPEAN PATENT APPLICATION

(11) **EP 3 690 568 A1**
(43) Date of publication of application: **05.08.2020**
(21) Application number: 20154545.6
(22) Date of filing: 30.01.2020
(51) Int. Cl.: G05B 19/18, G06Q 30/02

(54) **CUTTING SYSTEM**

(30) Priority: 31.01.2019 JP 2019016003
(71) Applicant: DGSHAPE Corporation, Hamamatsu-shi, Shizuoka 431-2103 (JP)
(72) Inventor: HANAJIMA, Masaki, Hamamatsu-shi, Shizuoka 431-2103 (JP); SAITO, Koji, Hamamatsu-shi, Shizuoka 431-2103 (JP); MINENO, Yosuke, Hamamatsu-shi, Shizuoka 431-2103 (JP); KAWAI, Takayuki, Hamamatsu-shi, Shizuoka 431-2103 (JP); YOSHIOKA, Shiro, Hamamatsu-shi, Shizuoka 431-2103 (JP)
(74) Representative: Grünecker Patent- und Rechtsanwälte PartG mbB

(57) **Abstract**

A cost managing device 120 of a cutting system 1 receives a material usage 163, a tool usage 164, and a spindle rotation time 165 at execution of a cutting program PG1 from a cutting machine 100 and the cutting program PG1. A material cost 193, a tool cost 194, a spindle cost 195, and a personnel cost 196 are calculated based on the material usage 163, the tool usage 164, the spindle rotation time 165, and the operation time 166, respectively. A total cost 198 at execution of the cutting program PG1 is calculated based on the material cost 193, the tool cost 194, the spindle cost 195, and the personnel cost 196.

## Description

### BACKGROUND OF THE INVENTION

### 1. Field

The present invention relates to a cutting system. More specifically, the present invention relates to a cutting system including a cutting machine and a cost managing device.

### 2. Description of the Background Art

For example, Japanese Laid-open Patent Publication No. 2015-120222 discloses a cutting machine that produces an object by cutting a workpiece made of a predetermined material, such as ceramic, resin, or the like, by molding into a desired shape. The cutting machine disclosed in Japanese Laid-open Patent Publication No. 2015-120222 includes a gripper that grips a bar-shaped processing tool, a spindle that rotates the gripper, and a supporting portion, that is, for example, a frame body that supports the workpiece. The cutting machine cuts the workpiece using the processing tool by changing respective positions of the processing tool that is held by the gripper and is rotating and the workpiece supported by the supporting portion relative to each other. As a result, a desired object can be produced.

### SUMMARY OF THE INVENTION

In the above described cutting machine, profits are calculated for one or more objects produced by the cutting machine in some cases. The profits for the one or more produced objects are calculated, for example, by subtracting costs spent in cutting a workpiece by the cutting machine in order to produce the one or more objects from sales for the one or more objects. Conventionally, calculation of the profits for the one or more objects is manually performed, the above described costs cannot be accurately calculated, and therefore, the profits are estimated in some cases. However, the profits are preferably calculated more accurately, and costs spent in cutting a workpiece by the cutting machine are preferably calculated more accurately.

In view of the foregoing, preferred embodiments of the present invention provide a cutting system that can more accurately calculate costs spent in cutting a workpiece by a cutting machine.

A cutting system disclosed herein includes a cutting machine and a cost managing device. The cutting machine cuts a workpiece, based on a cutting program designated in advance. The cost managing device manages costs spent when the cutting machine executes the cutting program. The cutting machine includes a tool gripper configured to grip a processing tool, a spindle provided in the tool gripper and configured to rotate the tool gripper, a supporting mechanism configured to support the workpiece, and a controller. The controller includes a tool usage measurement controller, a rotation time measurement controller, and a transmitter. The tool usage measurement controller measures a tool usage of the processing tool gripped by the tool gripper at execution of the cutting program. The rotation time measurement controller measures a spindle rotation time of the spindle at execution of the cutting program. The transmitter transmits the tool usage and the spindle rotation time to the cost managing device. A material usage of the workpiece used in execution of the cutting program is set in the cutting program. The cost managing device includes a management controller. The management controller includes a receiver, a time acquirer, a first cost calculator, a second cost calculator, a third cost calculator, a fourth cost calculator, and a total cost calculator. The receiver receives the tool usage and the spindle rotation time transmitted by the transmitter. The time acquirer acquires an operation time of a user, which has been set for each cutting program executed by the cutting machine. The first cost calculator calculates a material cost at execution of the cutting program, based on the material usage set in the cutting program. The second cost calculator calculates a tool cost at execution of the cutting program, based on the tool usage received by the receiver. The third cost calculator calculates a spindle cost at execution of the cutting program, based on the spindle rotation time received by the receiver. The fourth cost calculator calculates a personnel cost at execution of the cutting program, based on the operation time acquired by the time acquirer. The total cost calculator calculates a total cost at execution of the cutting program, based on the material cost, the tool cost, the spindle cost, and the personnel cost.

According to the cutting system, an object is produced by cutting a workpiece by the cutting machine. As costs spent for this cutting, there are at least the material cost based on the material usage for the workpiece, the tool cost based on the tool usage of the processing tool, the spindle cost based on the spindle rotation time of the spindle, and the personnel cost based on the operation time of the user. The material usage is set in the cutting program executed in cutting of the workpiece. The cutting program is a cutting program actually executed by the cutting machine, and therefore, a value of the material usage is more accurate. After execution of the cutting program by the cutting machine, the tool usage and the spindle rotation time are acquired from the cutting machine. Therefore, the tool usage and the spindle rotation time are acquired from the cutting machine that has actually executed the cutting program, and therefore, a more accurate value can be obtained for each of the tool usage and the spindle rotation time. Respective values of the material cost, the tool cost, and the spindle cost calculated based on the material usage, the tool usage, and the spindle rotation time acquired in the above described manner are more accurate than those manually calculated in a known manner. Therefore, the total cost at execution of the cutting program can be more accurately calculated based on the material cost, the tool cost, and the spindle cost calculated in the above described manner. Therefore, the cost spent in cutting of the workpiece by the cutting machine can be more accurately calculated.

According to the present invention, a cutting system that can more accurately calculate costs spent in cutting of a workpiece by a cutting machine can be provided.

### BRIEF DESCRIPTION OF THE DRAWINGS

[FIG. 1] FIG. 1 is a conceptual view of a cutting system according to an embodiment.
[FIG. 2] FIG. 2 is a perspective view of a cutting machine.
[FIG. 3] FIG. 3 is a front view of the cutting machine, illustrating a state in which a cover is opened.
[FIG. 4] FIG. 4 is a perspective view of a tool magazine, a rotation supporting member, and a clamp.
[FIG. 5] FIG. 5 is a block diagram of the cutting system.
[FIG. 6] FIG. 6 is a table illustrating an example of a cutting history table.
[FIG. 7] FIG. 7 is a table illustrating an example of an error history table.
[FIG. 8] FIG. 8 is a diagram illustrating a data flow used when cutting program profits are calculated.
[FIG. 9] FIG. 9 is a diagram illustrating a data flow used when a total error cost is calculated.
[FIG. 10] FIG. 10 is a diagram illustrating a data flow used when total periodic profits are calculated.
[FIG. 11] FIG. 11 is a view illustrating a daily profit screen.
[FIG. 12] FIG. 12 is a view illustrating a weekly profit screen.
[FIG. 13] FIG. 13 is a view illustrating a cutting machine profit screen.
[FIG. 14] FIG. 14 is a view illustrating a ranking profit screen.

### DETAILED DESCRIPTION OF THE PREFERRED EMBODIMENTS

With reference to the attached drawings, a cutting system according to an embodiment of the present invention will be described below. Note that, as a matter of course, an embodiment described herein is not intended to be particularly limiting the present invention.

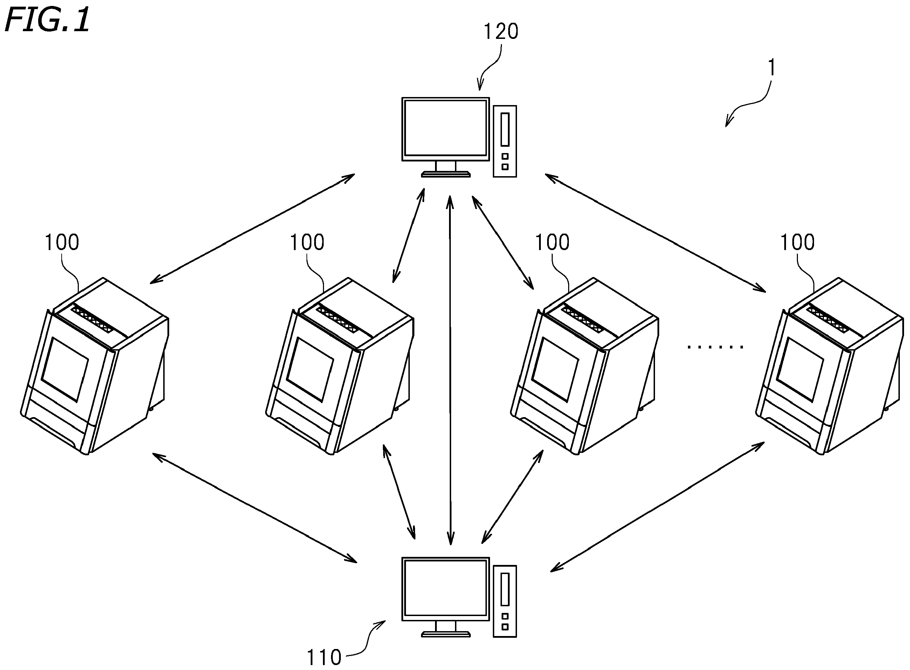

FIG. 1 is a conceptual view of a cutting system 1 according to this embodiment. As illustrated in FIG. 1, the cutting system 1 includes a cutting machine 100, a CAM device 110, and a cost managing device 120. The cutting system 1 calculates costs spent on an object produced by cutting a workpiece 5 by the cutting machine 100 and profits based on the costs and displays the costs and the profits.

There is no particular limitation on the number of cutting machines 100 according to this embodiment. The cutting system 1 may include one or more cutting machines 100. In the cutting system 1, profits or the like for each cutting machine 100 can be calculated and be displayed. Each unit will be described below.

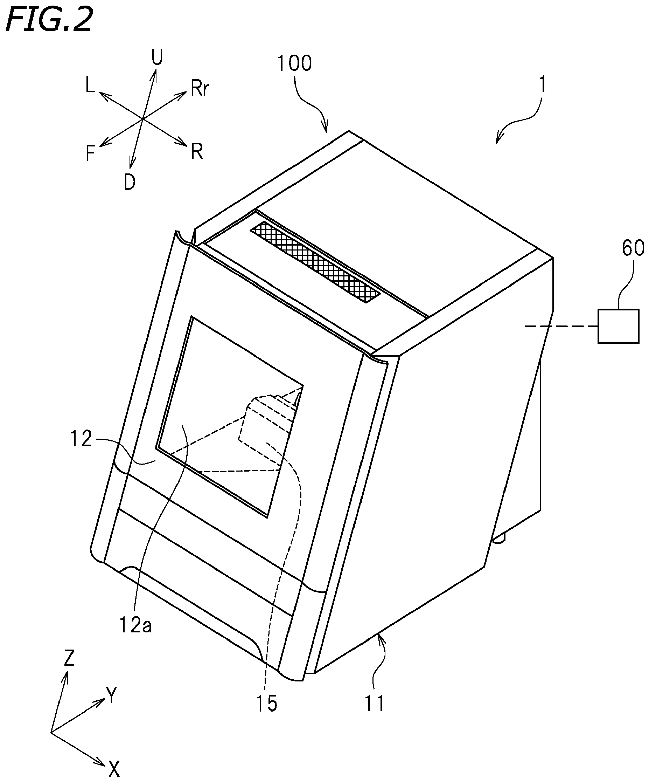

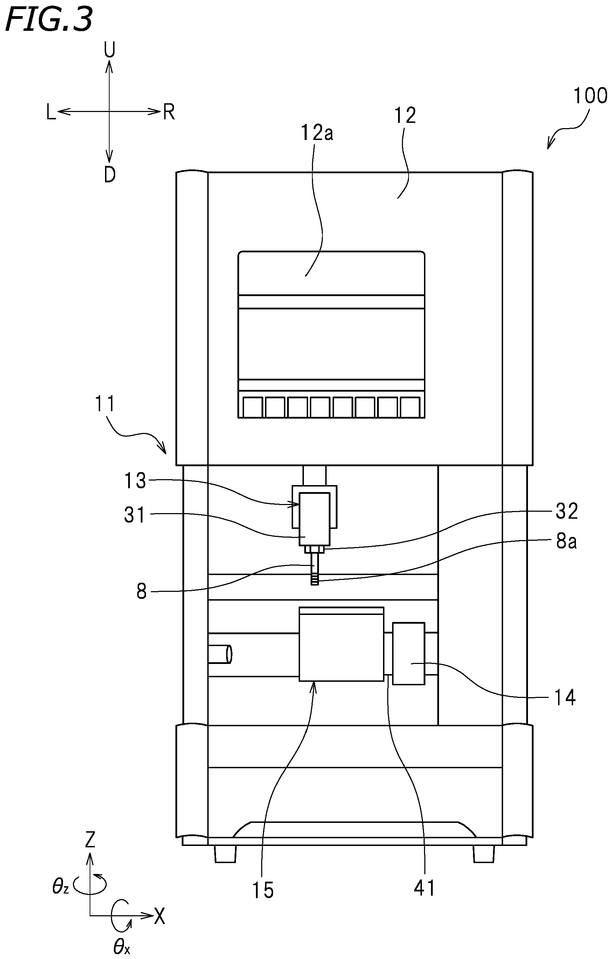

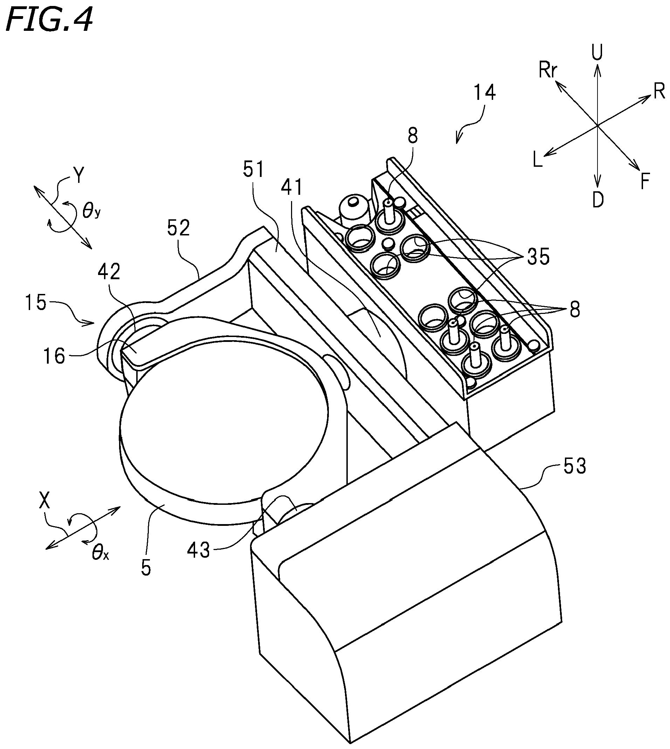

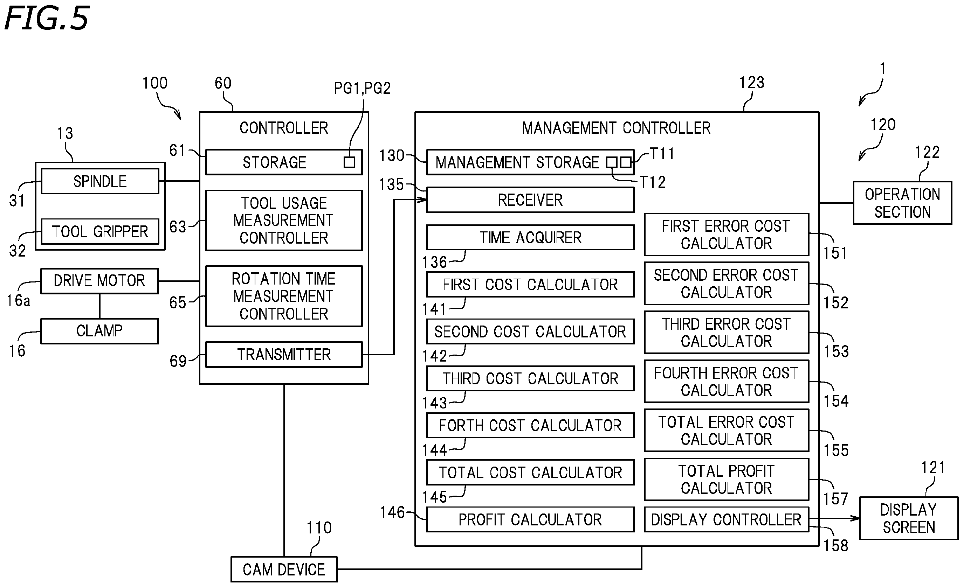

First, the cutting machine 100 will be described. FIG. 2 is a perspective view of the cutting machine 100. FIG. 3 is a front view of the cutting machine 100, illustrating a state in which a cover 12 is opened. FIG. 4 is a perspective view of a tool magazine 14, a rotation supporting member 15, and a clamp 16 which will be described later. FIG. 5 is a block diagram of the cutting system 1. In the following description, left and right mean left and right when viewed from a user who is in front of the cutting machine 100, respectively. A bottom surface that forms an internal space of a main body 11 of the cutting machine 100 is downwardly inclined in a direction from a near side to a further side when viewed from the user. Therefore, in this embodiment, a direction in which the cutting machine 100 approaches the user along the bottom surface is a front direction and a direction in which the cutting machine 100 moves away from the user along the bottom surface is a rear direction. Up and down in a direction perpendicular to the bottom surface mean up and down. Note that reference symbols F, Rr, L, R, U, and D in the drawings indicate front, rear, left, right, up, and down, respectively.

In this embodiment, where axes that are perpendicular to each other are an X axis, a Y axis, and a Z axis, the cutting machine 100 is arranged in a plane surface formed by the X axis and the Y axis. The X axis extends in a left-right direction, the Y axis extends in a front-rear direction, and the Z axis extends in an up-down direction. The reference symbols θx, θy, and θz in the drawings indicate rotational directions around the X axis, the Y axis, and the Z axis, respectively. However, these directions are used herein merely for convenience of description, do not limit setting modes of the cutting machine 100, and do not limit the present invention.

A plurality of the cutting machine 100 according to this embodiment has the same configuration. Therefore, a configuration of one of the cutting machines 100 will be described below and description of configurations of the other cutting machines 100 will be omitted. However, some or all of the plurality of cutting machines 100 may have different configurations from each other. The cutting machine 100 may be a cutting machine with a so-called a disk changer. Note that, as the disk changer in this case, a known disk changer can be employed. As the disk changer, for example, a workpiece conveying device described in Japanese Laid-open Patent Publication No. 2018-89763 can be employed.

The cutting machine 100 produces an object by cutting a workpiece 5 (see FIG. 4). Herein, there is no particular limitation on a type of the object. However, the object is, for example, a crown prosthesis. Examples of the crown prosthesis include, for example, an inlay, a crown, a bridge, or the like. In this embodiment, the cutting machine 100 is used in the dental field and produces a crown prosthesis from the workpiece 5.

The workpiece 5 has, for example, a disk shape. The workpiece 5 is made of various materials, such as zirconia, a wax, a polymethyl methacrylate resin (PMMA), a hybrid resin, a polyether ether ketone resin (PEEK), plaster, or the like. When zirconia is used as a material of the workpiece 5, for example, semi-sintered zirconia is used. However, there is no particular limitation on the shape and material of the workpiece 5.

As illustrated in FIG. 2, the cutting machine 100 includes the main body 11, the cover 12, a cutting mechanism 13 (see FIG. 3), the tool magazine 14 (see FIG. 4), the rotation supporting member 15, and the clamp 16 (see FIG. 4). The main body 11 is formed into a box shape and has a space inside. Although not illustrated in detail, the bottom surface that forms the space is downwardly inclined in a direction from the front to the rear. A front portion of the main body 11 is opened. As illustrated in FIG. 3, the cover 12 is supported by the main body 11 such that the opening of the main body 11 is openable and closable. A window 12a is provided in the cover 12. The user can view inside of the main body 11 through the window 12a.

As illustrated in FIG. 3, the cutting mechanism 13 cuts the workpiece 5 using a processing tool 8. The cutting mechanism 13 is brought into contact with the workpiece 5 while the processing tool 8 is rotated, thereby cutting the workpiece 5. The cutting mechanism 13 includes a spindle 31 and a tool gripper 32. The spindle 31 rotates the tool gripper 32 and the processing tool 8 gripped by the tool gripper 32. The spindle 31 is provided so as to be exchangeable with respect to the main body 11. The spindle 31 extends in the up-down direction and is configured to be rotatable around the Z axis (θz). The tool gripper 32 grips the processing tool 8 and is provided in the spindle 31. Specifically, the tool gripper 32 is provided on a bottom surface of the spindle 31. The spindle 31 rotates around the Z axis (θz), and thereby, the tool gripper 32 and the processing tool 8 gripped by the tool gripper 32 rotate around the Z axis (θz), in other words, around a central axis of the processing tool 8. In this embodiment, the cutting mechanism 13 is configured to move in the left-right direction and the up-down direction by a first mover (not illustrated).

In this embodiment, provided are a plurality of processing tools 8, which are gripped by the tool gripper 32. Each of the processing tools 8 has a bar shape and includes an edge tool 8a in a lower portion. The plurality of processing tools 8 each including the edge tool 8a with a different shape is prepared in advance. During cutting, in accordance with a cutting program PG1 (see FIG. 5) which will be described later, the processing tool 8 gripped by the tool gripper 32 is exchanged with another processing tool 8 as necessary.

As illustrated in FIG. 4, the tool magazine 14 can store the plurality of processing tools 8. In this embodiment, the tool magazine 14 is formed into a box shape. A plurality of storage holes 35 in which the processing tools 8 is stored is formed in an upper surface of the tool magazine 14. The processing tools 8 are inserted through the storage holes 35 with upper portions of the processing tools 8 exposed through the storage holes 35. Note that there is no particular limitation on the number of the storage holes 35. In this embodiment, the number of the storage holes 35 is ten. Therefore, in this embodiment, ten processing tools 8 can be stored in the tool magazine 14. In exchanging the processing tool 8 gripped by the tool gripper 32, the processing tool 8 gripped by the tool gripper 32 is returned to the corresponding one of the storage holes 35. Then, the cutting mechanism 13 is moved to a position over the processing tool 8 that is to be used next. Thereafter, an upper edge of the processing tool 8 located under the tool gripper 32 is gripped by the tool gripper 32.

In this embodiment, a first rotation axis 41 that rotationally supports the rotation supporting member 15 is provided in the tool magazine 14. The first rotation axis 41 extends in the left-right direction and is connected to the rotation supporting member 15. Although not illustrated, a second driving mechanism that rotates the first rotation axis 41 is provided in the tool magazine 14. The first rotation axis 41 is configured to be rotatable around the X axis (θx) by the second driving mechanism. The first rotation axis 41 rotates around the X axis (θx), and thereby, the rotation supporting member 15 rotates around the X axis (θx).

The rotation supporting member 15 rotatably supports the clamp 16. The rotation supporting member 15 is formed into a substantially C shape as viewed in a planar view. The rotation supporting member 15 is connected to the tool magazine 14 via the first rotation axis 41. The rotation supporting member 15 includes a first portion 51, a second portion 52, and a third portion 53. The first portion 51 is disposed on a left side of the tool magazine 14 and extends in the front-rear direction. The second portion 52 extends leftward from a rear end of the first portion 51. The third portion 53 extends leftward from a front end of the first portion 51. The third portion 53 is opposed to the second portion 52. In this embodiment, the clamp 16 is disposed between the second portion 52 and the third portion 53.

The clamp 16 supports the workpiece 5 in cutting the workpiece 5. The clamp 16 is an example of a supporting mechanism. In this embodiment, an adapter (not illustrated) is attached to the workpiece 5, and the clamp 16 supports the workpiece 5 via the adapter. For example, the clamp 16 has a shape corresponding to a portion of a shape of the workpiece 5. Herein, the clamp 16 has a substantially C shape. In this embodiment, cutting is performed on the workpiece 5 supported by the clamp 16. The clamp 16 is rotatably supported by the second portion 52 and the third portion 53 of the rotation supporting member 15. One end of a second rotation axis 42 is connected to a rear portion of the clamp 16, and the second portion 52 is connected to the other end of the second rotation axis 42. One end of a third rotation axis 43 is connected to a front portion of the clamp 16, and the third portion 53 is connected to the other end of the third rotation axis 43. In this embodiment, a drive motor 16a (see FIG. 5) that rotates the clamp 16 around the Y axis (θy) is provided in the third portion 53.

As illustrated in FIG. 2, the cutting machine 100 includes a controller 60. The controller 60 controls cutting of the workpiece 5. The controller 60 is formed of a microcomputer and is provided inside the main body 11. The controller 60 includes, for example, a central processing unit (CPU), a ROM that stores a program or the like which is executed by the CPU, a RAM, or the like. Herein, control of cutting of the workpiece 5 is performed using the program stored in the microcomputer.

As illustrated in FIG. 5, the controller 60 is communicably connected to the spindle 31 and controls rotation of the spindle 31. The controller 60 is communicably connected to the drive motor 16a that rotates the clamp 16 around the Y axis (θy) and controls the drive motor 16a. Although not illustrated, the controller 60 is communicably connected to the first driving mechanism that moves the cutting mechanism 13 in the left-right direction and the up-down direction and controls the first driving mechanism. Although not illustrated, the controller 60 is communicably connected to the second driving mechanism that rotates the first rotation axis 41 and controls the second driving mechanism.

The cutting machine 100 according to this embodiment automatically cuts the workpiece 5 using the one or more processing tools 8, based on the cutting program PG1 (see FIG. 5), and thereby, produces desired one or more objects. The cutting machine 100 cuts the workpiece 5, based on the cutting program PG1 designated in advance. The cutting program PG1 is so-called NC data (an NC program) or job data. The cutting program PG1 indicates in what kind of procedure the cutting machine 100 cuts the workpiece 5. In the cutting program PG1, a plurality of processing steps in which an operation of the cutting mechanism 13 and an operation of the clamp 16 that supports the workpiece 5 are defined by coordinate values is recorded.

The cutting program PG1 is created, for example, by a CAM device 110 (see FIG. 1). CAM is an abbreviation of computer aided manufacturing, and the CAM device 110 is a device called computer aided manufacturing device. The CAM device 110 is realized, for example, by a personal computer. This personal computer may be a general-purpose computer and may be a dedicated computer. As illustrated in FIG. 1, the CAM device 110 is communicably connected to the cutting machine 100. The CAM device 110 creates the cutting program PG1, based on data (which will be hereinafter also referred to as object data) for a shape or shapes of one or more objects that are produced by cutting the workpiece 5. Note that the object data is STL data, which is data created, for example, by a computer aided design device (which will be hereinafter also referred to as a CAD device). The cutting program PG1 created by the CAM device 110 is transmitted to the cutting machine 100 from the CAM device 110, for example, at a start of cutting. The cutting machine 100 executes the received cutting program PG1 to produce one or more objects from the workpiece 5.

In the following description, "profits for the cutting machine 100" means a total amount of profits (specifically, profits or losses) for one or more objects produced by the cutting machine 100. Conventionally, when the profits for the cutting machine 100 are managed, the user manually calculates the profits in many cases. Therefore, for the profits for the cutting machine 100, an estimate is calculated in many cases, and therefore, more accurate profits cannot be indicated in some cases. For example, the cutting machine 100 produces an object using several consumables. Examples of the consumables include, for example, the workpiece 5, the processing tool 8, the spindle 31, or the like. The consumables are exchanged after being used to some extent. When the cutting machine 100 cuts the workpiece 5, costs corresponding to an amount of consumption of the consumables are included in the profits, and the profits for the cutting machine 100 are calculated, so that more accurate profits can be calculated. However, when the profits are manually calculated, it is difficult to accurately grasp the amount of consumption of the consumables, and therefore, for each of the costs and the profits for the cutting machine 100, an estimate is calculated for the costs and the profits in many cases.

Therefore, the present inventor focused on information that is obtained from the cutting machine 100 and the cutting program PG1 that is executed when the cutting machine 100 cuts the workpiece 5 in order to more accurately calculate the profits for the cutting machine 100. For example, the cutting machine 100 can grasp a rotation time of the spindle 31 during cutting, the usage of the processing tool 8, or the like. For example, a use cost for the spindle 31 can be calculated by multiplying the rotation time of the spindle 31 by a cost per unit of the rotation time of the spindle 31. For example, a use cost for the processing tool 8 can be calculated by multiplying the usage of the processing tool 8 by a cost per unit of the usage of the processing tool 8.

For example, in the cutting program PG1, information for the workpiece 5 that is cut by executing the cutting program PG1 is set. The information for the workpiece 5 includes a usage of the workpiece 5 that is used in execution of the cutting program PG1. Herein, the usage of the workpiece 5 includes an amount of the workpiece 5 in the object and an amount of a cut portion of the workpiece 5. The usage of the workpiece 5 may be a ratio of the usage of the workpiece 5 to an entire volume of the workpiece 5, that is, a usage rate. Therefore, the usage of the workpiece 5 can be acquired from the cutting program PG1 that has been executed and a material cost for the produced object, based on the usage of the workpiece 5 and a unit price of the workpiece 5. As described above, information acquired from each of the cutting machine 100 and the cutting program PG1 is actual information during cutting, and therefore, is more accurate information. Therefore, the profits for the cutting machine 100 can be more accurately calculated by using the information acquired from each of the cutting machine 100 and the cutting program PG1.

In this embodiment, it is realized by more accurately calculating costs for the cutting machine 100 by the cost managing device 120 to accurately calculate the profits for the cutting machine 100. The cost managing device 120 manages costs spent when the cutting machine 100 executes the cutting program PG1. The cost managing device 120 calculates profits for each cutting program PG1, based on information during cutting obtained from the cutting machine 100 and the cutting program PG1. Herein, the cutting program PG1 is stored in a cutting file (not illustrated), and "for each cutting program PG1" means for each cutting program PG1 or each group of cutting programs PG1 stored in one cutting file.

In this embodiment, as described above, the costs and the profits for the cutting machine 100 are more accurately calculated from the information obtained from the cutting machine 100. Therefore, the controller 60 of the cutting machine 100 transmits necessary information for calculating costs to the cost managing device 120. In this embodiment, as illustrated in FIG. 5, the controller 60 of the cutting machine 100 includes a storage 61, a tool usage measurement controller 63, a rotation time measurement controller 65, and a transmitter 69. Each element of the controller 60 may be configured by a software and may be configured by a hardware. Each element of the controller 60 may be realized by one or more processors and may be incorporated in a circuit.

For example, when cutting starts, the cutting program PG1 transmitted from the CAM device 110 is stored in the storage 61. The cutting machine 100 cuts the workpiece 5 in accordance with the cutting program PG1 created by the CAM device 110 and designated by the user. As used herein "to designate by the user" means to designate the cutting program PG1, for example, by an operation of an operation section (not illustrated) of the cutting machine 100 by the user.

In the following description, among the cutting programs PG1, a cutting program executed at occurrence of an error in the cutting machine 100 will be referred to as an error program PG2. Herein, there is no particular limitation on contents of an error of the cutting machine 100. The error includes known errors. An error of the cutting machine 100 occurs when the workpiece 5 cannot be properly cut during cutting. Examples of the error include, for example, an error caused when the processing tool 8 is broken, an error caused when the tool gripper 32 cannot grip the processing tool 8, an error caused when the spindle 31 does not rotate at proper rotational speed, an error caused when the cutting mechanism 13 or the clamp 16 cannot move to a proper position, based on the cutting program PG1, or the like.

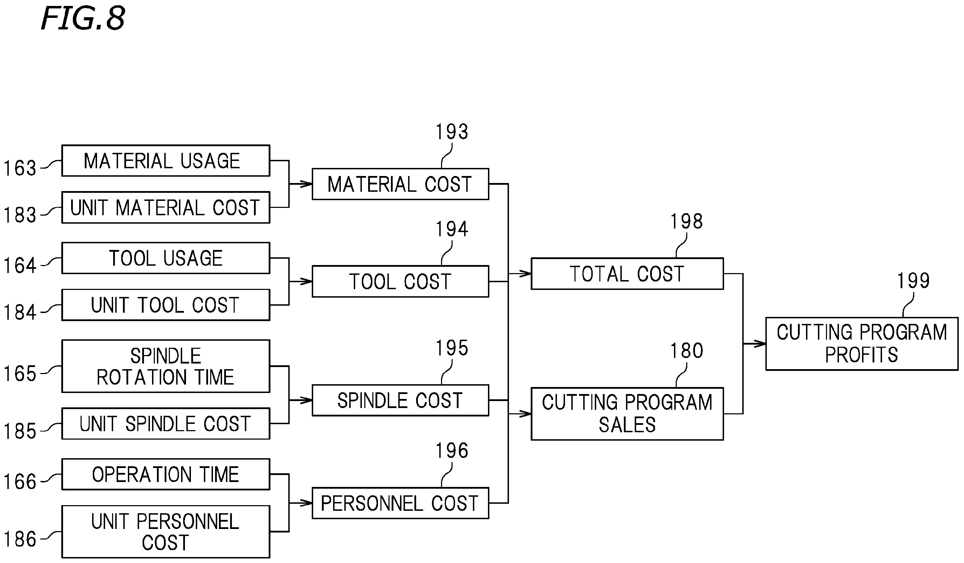

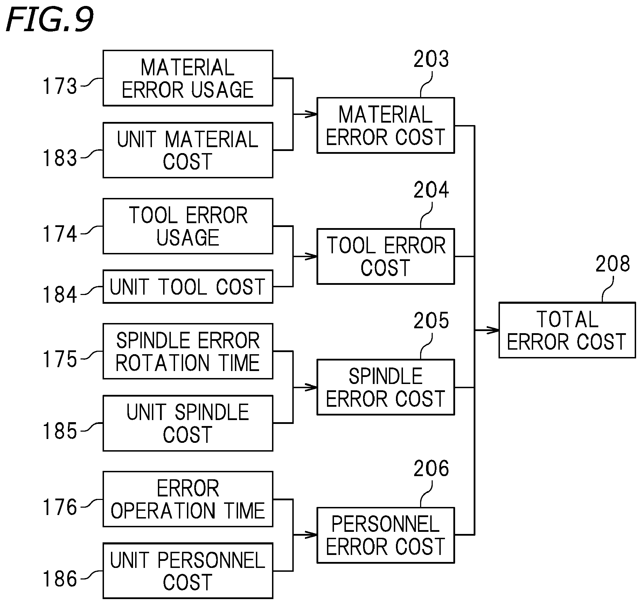

The tool usage measurement controller 63 measures a tool usage 164 (see FIG. 8) of the processing tool 8 gripped by the tool gripper 32 at execution of the cutting program PG1. The tool usage measurement controller 63 measures a tool error usage 174 (see FIG. 9) that is the usage of the processing tool 8 gripped by the tool gripper 32 at execution of the error program PG2. Herein, each of the tool usage 164 and the tool error usage 174 may be, for example, a time during which the processing tool 8 is used at execution of the cutting program PG1 (or the error program PG2) and may be rotational speed at which the processing tool 8 is rotated by the spindle 31. Each of the tool usage 164 and the tool error usage 174 may be measured for each cutting program PG1 (or each error program PG2).

The rotation time measurement controller 65 measures a spindle rotation time 165 (see FIG. 8) of the spindle 31 at execution of the cutting program PG1. The rotation time measurement controller 65 measures a spindle error rotation time 175 (see FIG. 9) of the spindle 31 at execution of the error program PG2. Herein, each of the spindle rotation time 165 and the spindle error rotation time 175 is, for example, a rotation time of the spindle 31 at execution of the cutting program PG1 (or the error program PG2). Each of the spindle rotation time 165 and the spindle error rotation time 175 is measured for each cutting program PG1 (or each error program PG2).

The transmitter 69 transmits, after execution of the cutting program PG1, information obtained during cutting of the workpiece 5 by the cutting machine 100 in accordance with the cutting program PG1 to the cost managing device 120 (specifically, a management controller 123 which will be described later (see FIG. 5)). Specifically, the transmitter 69 transmits the tool usage 164 measured by the tool usage measurement controller 63 and the spindle rotation time 165 measured by the rotation time measurement controller 65 to the cost managing device 120. The transmitter 69 also transmits, after occurrence of an error in the cutting machine 100, the tool error usage 174 measured by the tool usage measurement controller 63 and the spindle error rotation time 175 measured by the rotation time measurement controller 65 to the cost managing device 120.

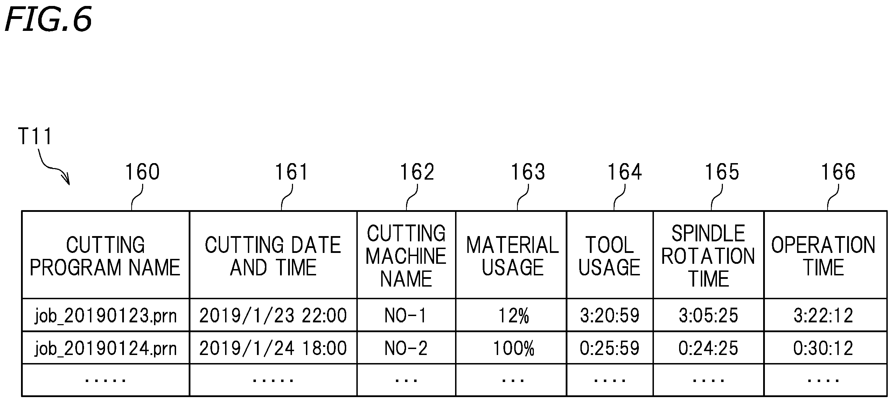

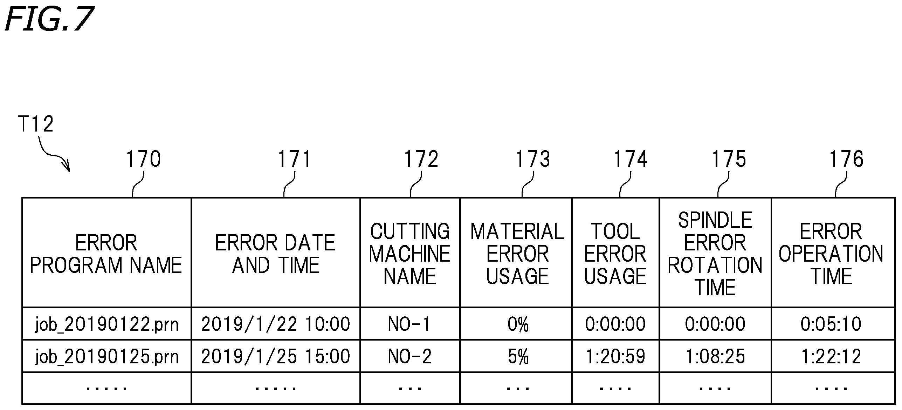

Note that, when the transmitter 69 transmits the tool usage 164 and the spindle rotation time 165 (or the tool error usage 174 and the spindle error rotation time 175), a cutting program name 160 (see FIG. 6. For example, a cutting file name of a cutting file in which the executed cutting program PG1 is stored.), a cutting date and time 161 (see FIG. 6), and a cutting machine name 162 (see FIG. 6) (or an error program name 170, an error date and time 171, and a cutting machine name 172 (for all, see FIG. 7)) may be transmitted. Herein, the cutting machine name 162, 172 is, for example, a device ID that is specific to the cutting machine 100 and has been given to the cutting machine 100 in advance. As the device ID, for example, a serial number given to each cutting machine 100 may be used.

In this embodiment, a material usage 163 (see FIG. 6) or a material error usage 173 (see FIG. 7) of the workpiece 5 used in execution of the cutting program PG1 as described above is set in the cutting program PG1. Therefore, the transmitter 69 transmits the cutting program PG1 (or the error program PG2) itself to the cost managing device 120. However, the transmitter 69 may be configured or programmed to transmit only the material usage 163 (or the material error usage 173) set in the cutting program PG1 (or the error program PG2) to the cost managing device 120.

Next, the cost managing device 120 according to this embodiment will be described. The cost managing device 120 is realized, for example, by a personal computer. The cost managing device 120 may be realized by a general-purpose computer and may be realized by a dedicated computer. The cost managing device 120 may be a so-called client-server type device. A portion of the cost managing device 120 may be so-called cloud computing. A portion of the cost managing device 120 may be a mobile terminal. Herein, the term "mobile terminal" includes a smartphone, a tablet terminal, of the like.

As illustrated in FIG. 1, the cost managing device 120 is communicably connected to the plurality of cutting machines 100 and the CAM device 110. There is no particular limitation on a method for the above described connection. The above described connection may be provided via a wired communication and may be provided via a wireless communication. In this embodiment, the cost managing device 120 manages costs and profits for the plurality of cutting machines 100.

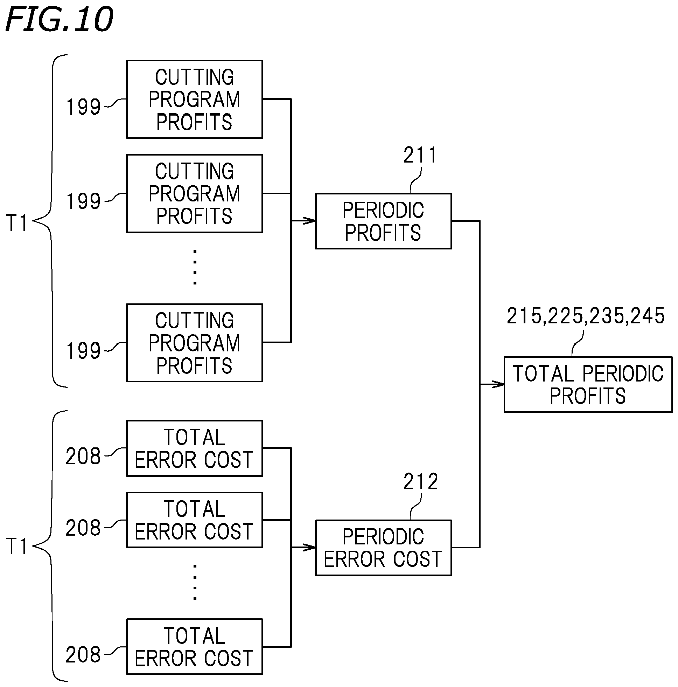

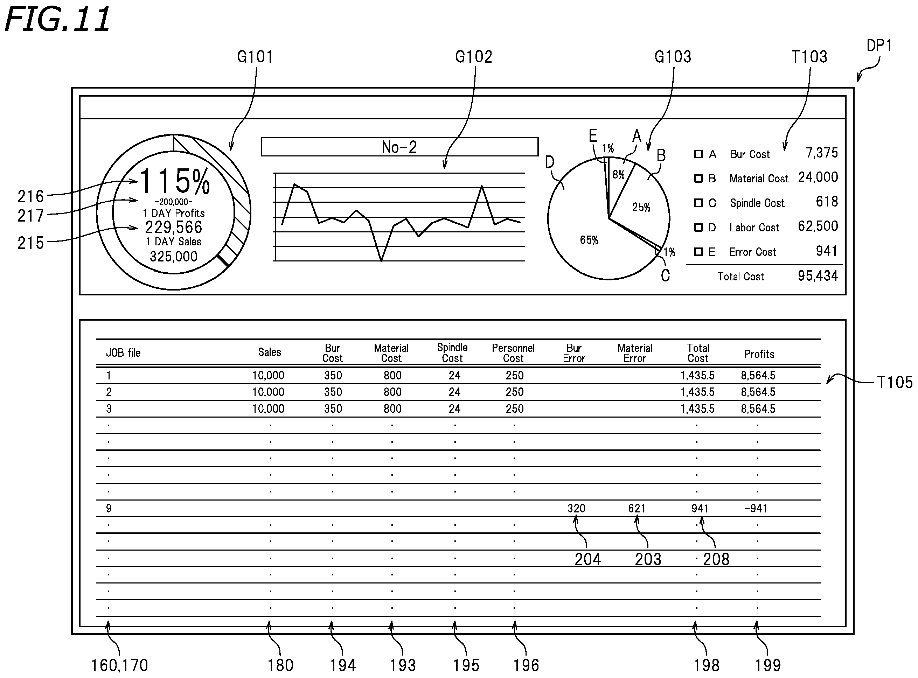

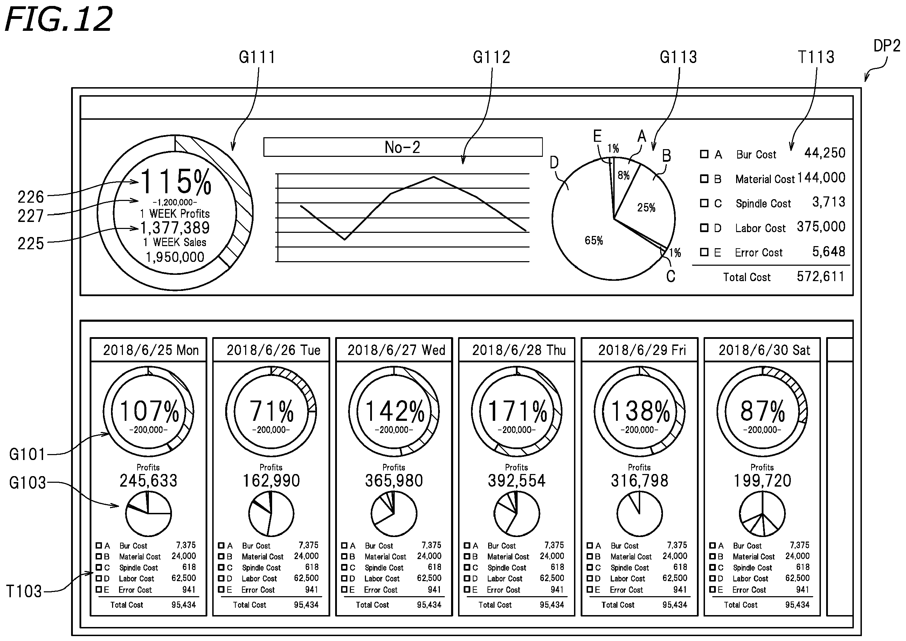

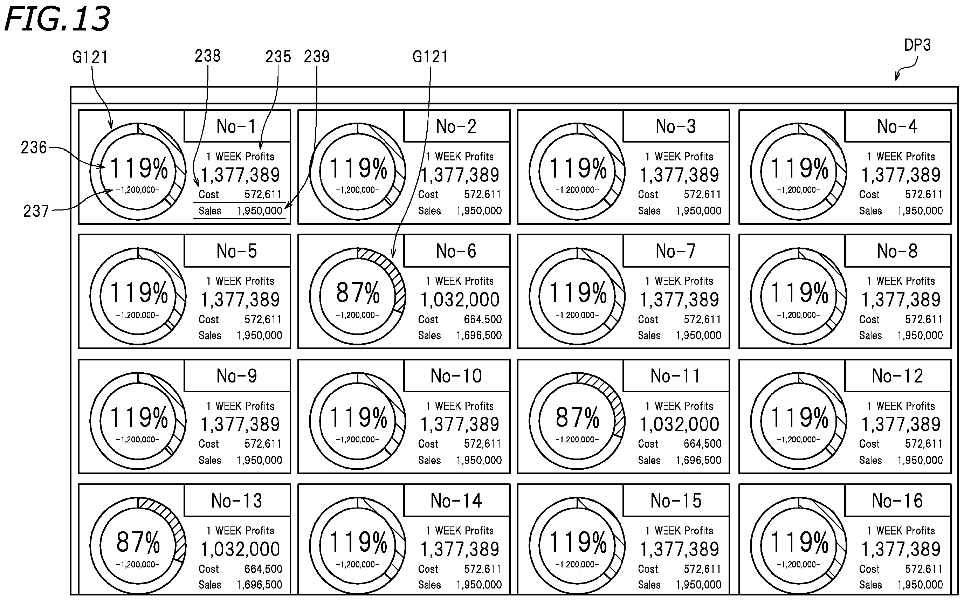

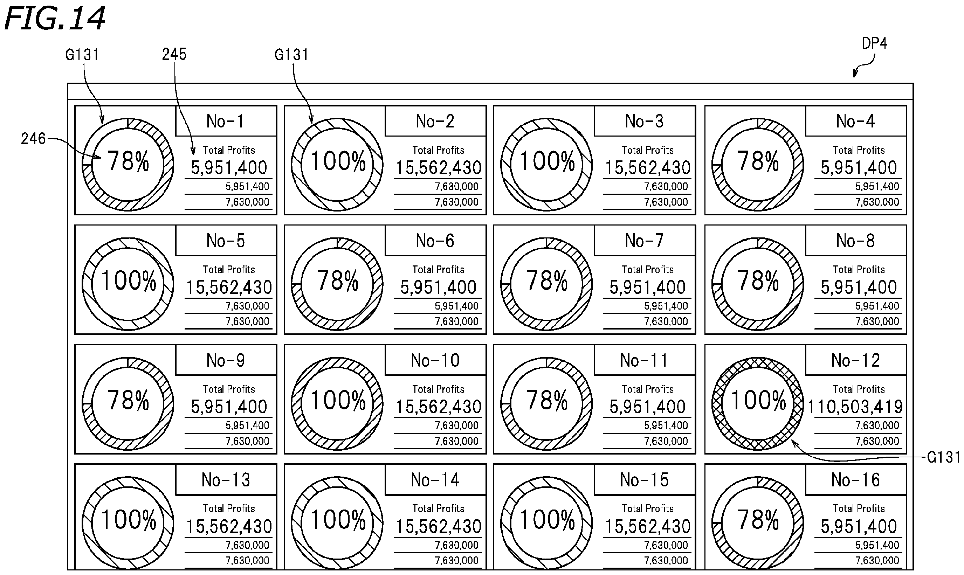

As illustrated in FIG. 5, the cost managing device 120 includes a display screen 121, an operation section 122, and the management controller 123. The costs and the profits for the cutting machine 100 are displayed on the display screen 121. Herein, profits corresponding to a predetermined period T1 (see FIG. 10) designated by the user can be displayed on the display screen 121, and when the plurality of cutting machines 100 is connected to the cost managing device 120, profits for each cutting machine 100 and total profits for all of the cutting machines 100 can be displayed on the display screen 121. Profit screens of a plurality of types may be displayed on the display screen 121, as necessary. As will be described in detail later, for example, a daily profit screen DP1 (see FIG. 11), a weekly profit screen DP2 (see FIG. 12), a cutting machine profit screen DP3 (see FIG. 13), a ranking profit screen DP4 (see FIG. 14), or the like is displayed on the display screen 121.

Note that there is no particular limitation on a type of the display screen 121. For example, the display screen 121 is a display of a mobile terminal. However, the display screen 121 may be a display of a desktop-type or notebook-type personal computer.

The operation section 122 is operated by the user. For example, the user can switch a type of a profit screen displayed on the display screen 121 by operating the operation section 122. Note that there is no particular limitation on the type of the operation section 122. For example, the operation section 122 is a touch panel provided on the display screen 121. However, the operation section 122 may be a keyboard or a mouse of the personal computer. Note that, herein, each of the number of the display screens 121 and the number of the operation sections 122 is one. But each of the number of the display screens 121 and the number of the operation sections 122 may be more than one.

The management controller 123 performs control in which information necessary for calculating profits for the cutting machine 100 is acquired from the cutting machine 100 and the CAM device 110 and the costs and the profits for the cutting machine 100 are calculated based on the acquired information. The management controller 123 performs control in which the costs and the profits for the cutting machine 100, which have been calculated, are displayed on the display screen 121. There is no particular limitation on a configuration of the management controller 123. The management controller 123 is, for example, a microcomputer. There is no particular limitation on a configuration of a hardware of the microcomputer. For example, the microcomputer includes a CPU, a ROM, a RAM, a storage, or the like. Note that, when the cost managing device 120 is a client-server type device, the management controller 123 is realized, for example, by a server. When the cost managing device 120 is cloud computing, the management controller 123 is realized, for example, in the cloud.

As illustrated in FIG. 5, the management controller 123 is communicably connected to the controller 60 of the cutting machine 100 and the CAM device 110 via a wired communication or a wireless communication. The management controller 123 is communicably connected to the display screen 121 and the operation section 122.

In this embodiment, the management controller 123 includes a management storage 130, a receiver 135, a time acquirer 136, a first cost calculator 141, a second cost calculator 142, a third cost calculator 143, a fourth cost calculator 144, a total cost calculator 145, and a profit calculator 146. The management controller 123 further includes a first error cost calculator 151, a second error cost calculator 152, a third error cost calculator 153, a fourth error cost calculator 154, a total error cost calculator 155, a total profit calculator 157, and a display controller 158. Each element of the management controller 123 may be configured by a software and may be configured by a hardware. Each element of the management controller 123 may be realized by one or more processors and may be incorporated in a circuit.

FIG. 6 is a table illustrating an example of a cutting history table T11. FIG. 7 is a table illustrating an example of an error history table T12. The management storage 130 is an example of first to fifth management storages. The cutting history table T11 (see FIG. 6) and the error history table T12 (see FIG. 7) are stored in the management storage 130. As illustrated in FIG. 6, the cutting history table T11 is a table in which a history of cutting by each cutting machine 100 is registered. The cutting history table T11 is a cutting history table provided for each cutting program PG1. The cutting history table T11 is used for calculating the profits for each cutting program PG1. Note that there is no particular limitation on a configuration of the cutting history table T11. In this embodiment, in the cutting history table T11, the cutting program name 160, the cutting date and time 161, the cutting machine name 162, the material usage 163, the tool usage 164, the spindle rotation time 165, and an operation time 166 are associated. In other words, in the cutting history table T11, there are items, such as the cutting program name 160, the cutting date and time 161, the cutting machine name 162, the material usage 163, the tool usage 164, the spindle rotation time 165, the operation time 166, or the like. Herein, "associated" means a state in which items are described in the same row in the table.

The cutting program name 160 is an item used for identifying the executed cutting program PG1. For example, the cutting program name 160 may be the cutting file name of a cutting file in which the cutting program PG1 is stored and may be a specific identification ID. The cutting date and time 161 is a date or a time of execution of the associated cutting program PG1. The cutting machine name 162 is an item used for identifying the cutting machine 100 that has executed the associated cutting program PG1 and is, for example, the specific device ID given to the cutting machine 100. The material usage 163 is the usage of the workpiece 5 at execution of the associated cutting program PG1. The tool usage 164 is the usage of the processing tool 8 at execution of the associated cutting program PG1. The tool usage 164 may be indicated by the rotational speed of the processing tool 8, and may be indicated by a use time of the processing tool 8. The spindle rotation time 165 is the rotation time of the spindle 31 at execution of the associated cutting program PG1. The spindle rotation time 165 is indicated, for example, by a duration time of rotation of the spindle 31.

The operation time 166 is an operation time of the user in accordance with a type of an object made by the associated cutting program PG1. The operation time 166 includes, for example, a time taken for the CAM device 110 to create the cutting program PG1, a time of designation of the cutting program PG1 by the user via the operation section 122, a time required for a finishing step in which polishing or the like is performed on the object cut by the cutting machine 100, or the like. The operation time 166 can be basically the same for each type of the object (for example, a type of crown prosthesis, such as an inlay, a crown, a bridge, or the like). Therefore, in this embodiment, the operation time 166 is a time set for each type of the object in advance. However, as for the operation time 166, an actual operation time of the user may be measured and the measured time may be used as the operation time 166.

As illustrated in FIG. 7, the error history table T12 is a table in which, when an error occurs in each cutting machine 100, a history of the error is registered. The error history table T12 is an error history table for each cutting program PG1 (in other words, the error program PG2) executed at occurrence of the error. The error history table T12 is used for calculating an error cost for each error program PG2. Note that there is no particular limitation on a configuration of the error history table T12. In this embodiment, each item of the error history table T12 corresponds to the corresponding one of the items of the cutting history table T11. In the error history table T12, the error program name 170, the error date and time 171, the cutting machine name 172, the material error usage 173, the tool error usage 174, the spindle error rotation time 175, and an error operation time 176 are associated. In other words, there are items, such as the error program name 170, the error date and time 171, the cutting machine name 172, the material error usage 173, the tool error usage 174, the spindle error rotation time 175, the error operation time 176, or the like in the error history table T12. Note that, each of the items 170 to 176 of the error history table T12 corresponds to the corresponding one of the items 160 to 166 of the cutting history table T11, and therefore, description of the items 170 to 176 will be omitted. The items 170 to 176 are acquired at occurrence of an error in the cutting machine 100.

Note that each of the cutting history table T11 and the error history table T12 may be formed of one table and may be formed of a plurality of tables. The cutting history table T11 and the error history table T12 may be collectively formed by one table. In this case, the collectively formed one table may include an item that indicates whether the associated cutting program PG1 is the cutting program PG1 (that is, the error program PG2) in which an error has occurred. Each of the cutting history table T11 and the error history table T12 may include, as an item, a type of a material of the workpiece 5 or a type of a produced object.

FIG. 8 is a diagram illustrating a data flow used when cutting program profits 199 are calculated. FIG. 9 is a diagram illustrating a data flow used when a total error cost 208 is calculated. FIG. 10 is a diagram illustrating a data flow used when total periodic profits 215 are calculated. In this embodiment, as illustrated in FIG. 8, a total 180 of sales (which will be hereinafter referred to as cutting program sales 180) for the one or more objects produced by the cutting program PG1, a unit material cost 183, a unit tool cost 184, a unit spindle cost 185, and a unit personnel cost 186 are stored in the management storage 130. The cutting program sales 180 is sales of an object produced by executing the cutting program PG1 and is, when a plurality of objects is produced by the cutting program PG1, a total of sales of the plurality of objects. The cutting program sales 180 is set for each cutting program PG1.

The unit material cost 183 is a material cost per predetermined unit of a material usage. A material cost 193 that is a cost for the workpiece 5 for one cutting program PG1 is calculated based on the material usage 163 of and the unit material cost 183 for the workpiece 5. Herein, the material cost 193 for the cutting program PG1 is calculated by the material usage 163 x the unit material cost 183. Note that, for example, when the workpieces 5 of a plurality of types, which have different sizes and are made of different materials, are used, that is, when the workpieces 5 of a plurality of types, unit prices of which are different, are used, the unit material cost 183 is set for each of the types of the workpieces 5.

The unit tool cost 184 is a tool cost per predetermined unit of a tool usage. A tool cost 194 that is a cost for the processing tool 8 for one cutting program PG1 is calculated based on the tool usage 164 of and the unit tool cost 184 for the processing tool 8. Herein, the tool cost 194 for the cutting program PG1 is calculated by the tool usage 164 x the unit tool cost 184. Note that, for example, when the processing tools 8 of a plurality of types are used, that is, when the processing tools 8 of a plurality of types, unit prices of which are different, are used, the unit tool cost 184 is set for each of the types of the processing tools 8.

The unit spindle cost 185 is a spindle cost per predetermined unit of a spindle rotation time. A spindle cost 195 that is a use cost for the spindle 31 for the one cutting program PG1 is calculated based on the spindle rotation time 165 of and the unit spindle cost 185 for the spindle 31. Herein, the spindle cost 195 for the cutting program PG1 is calculated by the spindle rotation time 165 x the unit spindle cost 185. Note that a plurality of the unit spindle costs 185 can be set in accordance with a type of the spindle 31 or types of the spindles 31.

The unit personnel cost 186 is a personnel cost per predetermined unit of an operation time. A personnel cost 196 that is a cost for the user for the cutting program PG1 is calculated based on the operation time 166 and the unit personnel cost 186. Herein, the personnel cost 196 for the cutting program PG1 is calculated by the operation time 166 x the unit personnel cost 186. Note that a plurality of the unit personnel costs 186 can be set in accordance with the number of users.

Note that the cutting program sales 180, the unit material cost 183, the unit tool cost 184, the unit spindle cost 185, and the unit personnel cost 186 stored in the management storage 130 are set, for example, by inputting the cutting program sales 180, the unit material cost 183, the unit tool cost 184, the unit spindle cost 185, and the unit personnel cost 186 in a master screen (not illustrated) displayed on the display screen 121 via the operation section 122 by the user.

The receiver 135 receives information for cutting of the cutting machine 100, which has been transmitted from the transmitter 69 of the cutting machine 100. In this embodiment, the receiver 135 receives the tool usage 164 and the spindle rotation time 165 transmitted by the transmitter 69. When an error occurs in the cutting machine 100, as illustrated in FIG. 9, the receiver 135 receives the tool error usage 174 and the spindle error rotation time 175 transmitted by the transmitter 69. As illustrated in FIG. 6 and FIG. 7, the receiver 135 receives the cutting program name 160 (or the error program name 170), the cutting date and time 161 (or the error date and time 171), and the cutting machine name 162, 172 which have been transmitted by the transmitter 69 and also receives the cutting program PG1 itself or the material usage 163, 173 of the workpiece 5, based on the cutting program PG1.

Note that the information received by the receiver 135 is registered in the cutting history table T11 or the error history table T12 as appropriate. For example, when the cutting program PG1 executed by the cutting machine 100 normally ends, information for the cutting machine 100, which has been received by the receiver 135, is registered in the cutting history table T11. On the other hand, when an error occurs in the cutting machine 100, information for the error of the cutting machine 100, which has been received by the receiver 135, is registered in the error history table T12. As illustrated above, one or more additional rows are added to one or more rows in each of the cutting history table T11 and the error history table T12 as appropriate in accordance with the information for the cutting machine 100, which has been received by the receiver 135.

The time acquirer 136 acquires the operation time 166 (see FIG. 8) set for each cutting program PG1 executed by the cutting machine 100 (in other words, for each type of an object produced by executing the cutting program PG1). The time acquirer 136 acquires the error operation time 176 (see FIG. 9) set for each error program PG2 executed by the cutting machine 100 (in other words, for each type of an object presumed to have been produced by executing the error program PG2). As described above, each of the operation time 166 and the error operation time 176 is, for example, a time taken for the CAM device 110 to create the cutting program PG1, a time of designation of each of the cutting program PG1 and the error program PG2 by the user via the operation section 122, a time required for a finishing step in which polishing or the like is performed on an object cut by the cutting machine 100, or the like, is set for each cutting program PG1, and is also set for each type of the object in advance. For example, the operation time 166 is set for each type of the object via the master screen (not illustrated) displayed on the display screen 121. The operation time 166 set for each type of the object is stored in the management storage 130. In other words, the operation time 166 set for each cutting program PG1 and each error program PG2 executed by the cutting machine 100 is stored in the management storage 130 in advance. The time acquirer 136 extracts the type of the object from the cutting program PG1 executed by the cutting machine 100. The time acquirer 136 then acquires the operation time 166 in accordance with the type of the object, which has been extracted, from the management storage 130. Note that the time acquirer 136 may be configured or programmed to acquire the operation time 166 from the cutting machine 100.

As illustrated in FIG. 8, the first cost calculator 141 calculates the material cost 193 at execution of the cutting program PG1, based on the material usage 163 of the workpiece 5, which has been set in the cutting program PG1. Herein, the first cost calculator 141 calculates the material cost 193 for each cutting program PG1 of the cutting history table T11, based on the material usage 163 and the unit material cost 183, by multiplying the material usage 163 and the unit material cost 183 together.

The second cost calculator 142 calculates the tool cost 194 at execution of the cutting program PG1, based on the tool usage 164 received by the receiver 135. Herein, the second cost calculator 142 calculates the tool cost 194 for each cutting program PG1 of the cutting history table T11, based on the tool usage 164 and the unit tool cost 184, by multiplying the tool usage 164 and the unit tool cost 184 together.

The third cost calculator 143 calculates the spindle cost 195 at execution of the cutting program PG1, based on the spindle rotation time 165 received by the receiver 135. Herein, the third cost calculator 143 calculates the spindle cost 195 for each cutting program PG1 of the cutting history table T11, based on the spindle rotation time 165 and the unit spindle cost 185, by multiplying the spindle rotation time 165 and the unit spindle cost 185 together.

The fourth cost calculator 144 calculates the personnel cost 196 at execution of the cutting program PG1, based on the operation time 166 obtained by the time acquirer 136. Herein, the fourth cost calculator 144 calculates the personnel cost 196 for each cutting program PG1 of the cutting history table T11, based on the operation time 166 and the unit personnel cost 186, by multiplying the operation time 166 and the unit personnel cost 186 together.

The total cost calculator 145 calculates a total cost 198 at execution of one cutting program PG1, based on the material cost 193, the tool cost 194, the spindle cost 195, and the personnel cost 196 calculated by the first to fourth cost calculators 141 to 144. The total cost 198 is a total of costs spent at execution of one cutting program PG1. In this embodiment, the total cost calculator 145 adds the material cost 193, the tool cost 194, the spindle cost 195, and the personnel cost 196 for each cutting program PG1 in the cutting history table T11, thereby calculating the total cost 198.

The profit calculator 146 calculates profits 199 (which will be hereinafter referred to as cutting program profits 199) at execution of the cutting program PG1, based on the cutting program sales 180 in the cutting program PG1 and the total cost 198 calculated by the total cost calculator 145. Herein, the profit calculator 146 subtracts the total cost 198 from the cutting program sales 180 for each cutting program PG1 of the cutting history table T11, thereby calculating the cutting program profits 199.

As illustrated in FIG. 9, the first error cost calculator 151 calculates a material error cost 203 at execution of the error program PG2, based on the material error usage 173 of the workpiece 5, which has been set in the error program PG2. Herein, the first error cost calculator 151 calculates the material error cost 203 for each error program PG2 of the error history table T12, based on the material error usage 173 and the unit material cost 183, by multiplying the material error usage 173 and the unit material cost 183 together.

The second error cost calculator 152 calculates a tool error cost 204 at execution of the error program PG2, based on the tool error usage 174 received by the receiver 135. Herein, the second error cost calculator 152 calculates the tool error cost 204 for each error program PG2 of the error history table T12, based on the tool error usage 174 and the unit tool cost 184, by multiplying the tool error usage 174 and the unit tool cost 184 together.

The third error cost calculator 153 calculates a spindle error cost 205 at execution of the error program PG2, based on the spindle error rotation time 175 received by the receiver 135. Herein, the third error cost calculator 153 calculates the spindle error cost 205 for each error program PG2 of the error history table T12, based on the spindle error rotation time 175 and the unit spindle cost 185, by multiplying the spindle error rotation time 175 and the unit spindle cost 185 together.

The fourth error cost calculator 154 calculates a personnel error cost 206 at execution of the error program PG2, based on the error operation time 176 acquired by the time acquirer 136. Herein, the fourth error cost calculator 154 calculates the personnel error cost 206 for each error program PG2 of the error history table T12, based on the error operation time 176 and the unit personnel cost 186, by multiplying the error operation time 176 and the unit personnel cost 186 together.

The total error cost calculator 155 calculates a total error cost 208 at execution of the error program PG2, based on the material error cost 203, the tool error cost 204, the spindle error cost 205, and the personnel error cost 206 calculated by the first to fourth error cost calculators 151 to 154. The total error cost 208 is a cost spent at execution of one error program PG2. In this embodiment, the total error cost calculator 155 adds the material error cost 203, the tool error cost 204, the spindle error cost 205, and the personnel error cost 206 for each error program PG2 in the error history table T12, thereby calculating the total error cost 208.

As illustrated in FIG. 10, in this embodiment, periodic profits 211 and a periodic error cost 212 can be calculated. Herein, the periodic profits 211 are a total of profits in the cutting program PG1 executed in the predetermined period T1. The periodic error cost 212 is a total of error costs in the error program PG2 executed in the predetermined period T1. There is no particular limitation on the predetermined period T1. For example, the predetermined period T1 may be one day, may be one week, and may be one month. The predetermined period T1 is stored in the management storage 130.

In this embodiment, the periodic profits 211 are calculated by the profit calculator 146. The periodic error cost 212 is calculated by the total error cost calculator 155. The profit calculator 146 calculates the periodic profits 211 in the cutting program PG1 executed in the predetermined period T1 from the cutting history table T11, based on the cutting date and time 161 (see FIG. 6) of the cutting history table T11. Herein, the profit calculator 146 calculates the periodic profits 211 by adding all of the cutting program profits 199 for the cutting program PG1 executed in the predetermined period T1. The total error cost calculator 155 calculates the periodic error cost 212 in the error program PG2 executed in the predetermined period T1 from the error history table T12, based on the error date and time 171 (see FIG. 7) of the error history table T12. Herein, the total error cost calculator 155 calculates the periodic error cost 212 by adding all of the total error costs 208 for the error program PG2 executed in the predetermined period T1.

The total profit calculator 157 calculates the total periodic profits 215, 225, 235, 245 illustrated in FIG. 10. Herein, the total periodic profits 215, 225, 235, 245 are profits for the entire cutting machine 100 in the predetermined period T1. The total profit calculator 157 calculates the total periodic profits 215, 225, 235, 245, based on the periodic profits 211 calculated by the profit calculator 146 and the periodic error cost 212 calculated by the total error cost calculator 155. Herein, the total profit calculator 157 calculates the total periodic profits 215, 225, 235, 245 in the predetermined period T1 by subtracting the periodic error cost 212 from the periodic profits 211.

The display controller 158 displays the total cost 198 (see FIG. 8) for each cutting program PG1, the total error cost 208 (see FIG. 9) for each error program PG2, the cutting program profits 199 (see FIG. 8), the total periodic profits 215 (see FIG. 10), or the like on the display screen 121. Note that there is no particular limitation on a method in which the display controller 158 displays each cost, an error cost, and profits. Each cost, an error cost, and profits are displayed, for example, using a graph, a table, or the like. In this embodiment, the display controller 158 can display profit screens of a plurality of types as necessary.

FIG. 11 is a view illustrating a daily profit screen DP1. FIG. 12 is a view illustrating a weekly profit screen DP2. FIG. 13 is a view illustrating a cutting machine profit screen DP3. FIG. 14 is a view illustrating a ranking profit screen DP4. Note that, in FIG. 11, "JOB File" and "Sales" are the cutting program name 160 (or the error program name 170) and the cutting program sales 180, respectively. In FIG. 11 to FIG. 14, "Bur Cost" is the tool cost 194, "Material Cost" is the material cost 193, "Spindle Cost" is the spindle cost 195, "Personnel Cost (or Labor Cost)" is the personnel cost 196. Moreover, "Error Cost" is the periodic error cost 212, "Bur Error" is the tool error cost 204, and "Material Error" is the material error cost 203. "Total Cost" is the total cost 198 and "Profits" is the cutting program profits 199. Note that each reference symbol "No-" with a number given thereto indicates the number (that is, a device ID) of the cutting machine 100.

In this embodiment, the display controller 158 can display the daily profit screen DP1 (see FIG. 11), the weekly profit screen DP2 (see FIG. 12), the cutting machine profit screen DP3 (see FIG. 13), and the ranking profit screen DP4 (see FIG. 14) on the display screen 121.

As illustrated in FIG. 11, the daily profit screen DP1 is a screen on which profits for the cutting machine 100 on a daily basis are displayed. The predetermined period T1 in the daily profit screen DP1 is one day. Note that the number of the cutting machines 100 that are objects of the daily profit screen DP1 may be one or more. An example illustrated in FIG. 11 illustrates the daily profit screen DP1 for one cutting machine 100 (herein, the cutting machine 100 with a device ID No-2). There is no particular limitation on a configuration of the daily profit screen DP1. In this embodiment, the daily profit screen DP1 includes a donut graph G101 indicating the total periodic profits 215 for one day and a target achievement ratio 216 for one day, a line graph G102 indicating changes in the total periodic profits 215 on a daily basis, a cost list T103 indicating a total of each of the costs 193 to 196 for one day, a pie graph G103 representing the cost list T103 in a graph, and a profit list T105 indicating the cutting program profits 199 for each cutting program PG1 for one day.

In this embodiment, a daily profit target 217 for one day is stored in the management storage 130. The daily profit target 217 is an example of a profit target for the predetermined period T1. The display controller 158 displays, on the display screen 121, whether the total periodic profits 215 for one day exceed the daily profit target 217. In this embodiment, whether the total periodic profits 215 for one day exceed the daily profit target 217 is displayed using the donut graph G101 and the target achievement ratio 216. In the example illustrated in FIG. 11, it is indicated by the target achievement ratio 216 that the total periodic profits 215 for one day exceed the daily profit target 217 by about 15%. The total periodic profits 215 on a daily basis in a period set in advance is indicated by the line graph G102.

In the cost list T103, a total of each of the material cost 193, the tool cost 194, the spindle cost 195, the personnel cost 196, and the total error cost 208 spent during one day is indicated. In the pie graph G103, a ratio of the total of each of the material cost 193, the tool cost 194, the spindle cost 195, the personnel cost 196, and the total error cost 208 spent during one day is indicated. In the profit list T105, the cutting program name 160 (or the error program name 170), the cutting program sales 180, the material cost 193, the tool cost 194, the spindle cost 195, the personnel cost 196, an error cost (for example, the tool error cost 204, the material error cost 203), the total cost 198, the cutting program profits 199, and the total error cost 208 for each cutting program PG1 executed during one day is indicated. Note that, in the example illustrated in FIG. 11, as the error cost, the tool error cost 204 and the material error cost 203 are indicated. However, the spindle error cost 205 or the personnel error cost 206 may be indicated.

As illustrated in FIG. 12, the weekly profit screen DP2 is a screen on which weekly profits for the cutting machine 100 are displayed. The predetermined period T1 in the weekly profit screen DP2 is one week. Note that the number of the cutting machines 100 that are objects of the weekly profit screen DP2 may be one or more. An example illustrated in FIG. 12 illustrates the weekly profit screen DP2 for one cutting machine 100 (herein, the cutting machine 100 with a device ID No-2). Note that there is no particular limitation on a configuration of the weekly profit screen DP2. In this embodiment, the weekly profit screen DP2 includes a donut graph G111 indicating total periodic profits 225 for one week and a target achievement ratio 226 for one week, a line graph G112 indicating changes in the total periodic profits 215 for one day for each day of the week, a cost list T113 indicating a total of each of the costs 193 to 196 and the total error cost 208 for one week, and a pie graph G113 representing the cost list T113 in a graph. In this embodiment, a weekly profit target 227 for one week is stored in the management storage 130. The donut graph G111 corresponds to the donut graph G101 of the daily profit screen DP1 (see FIG. 11). In the donut graph G111, a ratio of the total periodic profits 225 for one week to the weekly profit target 227 is indicated using the target achievement ratio 226.

The line graph G112 corresponds to the line graph G102 of the daily profit screen DP1 (see FIG. 11) and indicates the total periodic profits 215 for one day on each day of the week. The cost list T113 and the pie graph G113 correspond to the cost list T103 and the pie graph G103 of the daily profit screen DP1 (see FIG. 11), respectively. In the cost list T113, a total of each of the tool cost 194, the material cost 193, the spindle cost 195, the personnel cost 196, and the total error cost 208 spent for one week is indicated. In the pie graph G113, a ratio of the total of each of the tool cost 194, the material cost 193, the spindle cost 195, the personnel cost 196, and the total error cost 208 spent for one week is indicated.

In the weekly profit screen DP2, the donut graph G101, the cost list T103, and the pie graph G103 of the daily profit screen DP1 are displayed for each day of the week. The donut graph G101, the cost list T103, and the pie graph G103 for each day of the week are similar to the corresponding ones in the daily profit screen DP1, and therefore, description thereof will be omitted.

As illustrated in FIG. 13, the cutting machine profit screen DP3 is a screen on which, when the plurality of cutting machines 100 is connected to the cost managing device 120, total periodic profits 235 for one week for each of the cutting machines 100 is displayed. In the cutting machine profit screen DP3, the sixteen cutting machines 100 with device IDs No-1 to No-16 are connected to the cost managing device 120. In this case, the cost managing device 120 manages costs and profits for the sixteen cutting machines 100.

There is no particular limitation on a configuration of the cutting machine profit screen DP3. In this embodiment, in the cutting machine profit screen DP3, for each of the cutting machines 100, the total periodic profits 235 for one week, a total 238 of the total cost 198 for one week and the total error cost 208 for one week, a total 239 of the cutting program sales 180 for one week, and a donut graph G121 indicating a target achievement ratio 236 are indicated. The total 239 is a total of the cutting program sales 180 for the cutting program PG1 executed by one cutting machine 100 for one week. The total periodic profits 235 for one week in FIG. 13 can be calculated by subtracting the total 238 of the total cost 198 from the total 239 of the cutting program sales 180. A weekly profit target 237 for one cutting machine 100 is stored in the management storage 130. In the donut graph G121, a ratio of the total periodic profits 235 of one cutting machine 100 to the weekly profit target 237 for one cutting machine 100 is indicated using the target achievement ratio 236. In the cutting machine profit screen DP3, when the target achievement ratio 236 is 100% or more, the display controller 158 displays the donut graph G121 in a first color (for example, blue) (for example, see the donut graph G121 for the cutting machine 100 with the device ID No-1). On the other hand, when the target achievement ratio 236 is less than 100%, the display controller 158 displays the donut graph G121 in a second color (for example, red) which is different from the first color (for example, see the donut graph G121 for the cutting machine 100 with the device ID No-6).

As illustrated in FIG. 14, the ranking profit screen DP4 is a screen on which, when the plurality of the cutting machines 100 is connected to the cost managing device 120, one or more of the cutting machines 100 for which profits in total periodic profits 245 are high is displayed so as to be visually recognized easily. There is no particular limitation on a configuration of the ranking profit screen DP4. For example, in the ranking profit screen DP4, the total periodic profits 245 for one week and a donut graph G131 indicating a target achievement ratio 246 are indicated for each cutting machine 100 (specifically, each of the sixteen cutting machines 100 with the device ID No-1 to No-16). However, in the ranking profit screen DP4, for each cutting machine 100, the total 238 (see FIG. 13) of the total cost 198 and the total error cost 208 for one week which are indicated in the cutting machine profit screen DP3, the total 239 (see FIG. 13) of the cutting program sales 180 for one week, or the like may be indicated. Herein, a maximum value of the donut graph G131 is 100% and, even when the target achievement ratio 246 actually exceeds 100%, 100% is indicated as the maximum value. Other than that, the donut graph G131 has a similar configuration to that of the donut graph G121 of FIG. 13. The target achievement ratio 246 is calculated as a ratio of the total periodic profits 245 for one cutting machine 100 to the weekly profit target 237 (see FIG. 13) stored in the management storage 130.

In the ranking profit screen DP4, the donut graph G131 for the one or more of the cutting machines 100 for which the profits in the total periodic profits 245 are high (for example, the cutting machine 100 for which the profits are the highest) is displayed in a third color (for example, yellow). In FIG. 14, the profits in the total periodic profits 245 for the cutting machine 100 with the device ID No-12 are the highest and the donut graph G131 of this cutting machine 100 with No-12 is indicated in the third color. In the ranking profit screen DP4, when the ratio of the donut graph G131 is 100% (for example, the donut graph G131 of the cutting machine 100 with No-2), the donut graph G131 is indicated in the first color (for example, blue). On the other hand, when the target achievement ratio 246 is less than 100%, the donut graph G131 (for example, the donut graph G131 of the cutting machine 100 with No-1) is indicated in the second color (for example, red).

In this embodiment, when the daily profit screen DP1 or the weekly profit screen DP2 is displayed, the total profit calculator 157 calculates the corresponding one of the total periodic profits 215 and the total periodic profits 225 in the predetermined period T1 (for example, on a daily basis, on a weekly basis, or the like), based on the corresponding one of the date and time 161 and the date and time 171 of the cutting history table T11 and the error history table T12 (see FIG. 6 and FIG. 7). The display controller 158 then displays the corresponding one of the total periodic profits 215 on a day basis and the total periodic profits 225 on a weekly basis on the display screen 121 using a graph or a table, based on the corresponding one of the total periodic profits 215 and the total periodic profits 225 calculated by the total profit calculator 157. When the cutting machine profit screen DP3 or the ranking profit screen DP4 is displayed, the total profit calculator 157 calculates the corresponding one of the total periodic profits 235 and the total periodic profits 245 in the predetermined period T1 for each cutting machine 100, based on the corresponding one of the cutting machine names 162 and 172 (see FIG. 6 and FIG. 7) in the cutting history table T11 and the error history table T12. The display controller 158 then displays the corresponding one of the total periodic profits 235 and the total periodic profits 245 or the like for each cutting machine 100 on the display screen 121 using a graph or a table, based on the corresponding one of the total periodic profits 235 and the total periodic profit 245 calculated by the total profit calculator 157.

Note that the user can switch the profit screen displayed on the display screen 121 by operating the operation section 122 as necessary.

As described above, in this embodiment, the workpiece 5 is cut by the cutting machine 100, and thereby, an object is produced. As costs spent for this cutting, as illustrated in FIG. 8, there are at least the material cost 193 based on the material usage 163 for the workpiece 5, the tool cost 194 based on the tool usage 164 of the processing tool 8, the spindle cost 195 based on the spindle rotation time 165 of the spindle 31, and the personnel cost 196 based on the operation time 166 of the user, which has been set for each type of the object. The material usage 163 is set in the cutting program PG1 executed in cutting of the workpiece 5. The cutting program PG1 is a cutting program actually executed by the cutting machine 100, and therefore, a value of the material usage 163 is more accurate. After execution of the cutting program PG1 by the cutting machine 100, the tool usage 164 and the spindle rotation time 165 are acquired from the cutting machine 100. Therefore, the tool usage 164 and the spindle rotation time 165 are acquired from the cutting machine 100 that has actually executed the cutting program PG1, and therefore, a more accurate value can be obtained for each of the tool usage 164 and the spindle rotation time 165. Respective values of the material cost 193, the tool cost 194, and the spindle cost 195 calculated based on the material usage 163, the tool usage 164, and the spindle rotation time 165 obtained in the above described manner are more accurate than those manually calculated in a known manner. Therefore, the total cost 198 at execution of the cutting program PG1 can be more accurately calculated based on the material cost 193, the tool cost 194, the spindle cost 195, and the personnel cost 196. Therefore, the total cost 198 spent during cutting of the workpiece 5 by the cutting machine 100 can be more accurately calculated.

In this embodiment, as illustrated in FIG. 8, the first cost calculator 141 calculates the material cost 193 from the material usage 163 and the unit material cost 183. The second cost calculator 142 calculates the tool cost 194 from the tool usage 164 and the unit tool cost 184. The third cost calculator 143 calculates the spindle cost 195 from the spindle rotation time 165 and the unit spindle cost 185. The fourth cost calculator 144 calculates the personnel cost 196 from the operation time 166 and the unit personnel cost 186. As described above, the unit material cost 183, the unit tool cost 184, the unit spindle cost 185, and the unit personnel cost 186 are set in advance, and thereby, the material cost 193, the tool cost 194, the spindle cost 195, and the personnel cost 196 can be easily calculated based on the material usage 163, the tool usage 164, the spindle rotation time 165, and the operation time 166, respectively.

In this embodiment, as illustrated in FIG. 9, the first error cost calculator 151 calculates the material error cost 203 at execution of the error program PG2, based on the material error usage 173 set in the error program PG2. The second error cost calculator 152 calculates the tool error cost 204 at execution of the error program PG2, based on the tool error usage 174 received by the receiver 135. The third error cost calculator 153 calculates the spindle error cost 205 at execution of the error program PG2, based on the spindle error rotation time 175 received by the receiver 135. The fourth error cost calculator 154 calculates the personnel error cost 206 at execution of the error program PG2, based on the error operation time 176 acquired by the time acquirer 136. The total error cost calculator 155 calculates the total error cost 208 at execution of the error program PG2, based on the material error cost 203, the tool error cost 204, the spindle error cost 205, and the personnel error cost 206. In this embodiment, when an error occurs in the cutting machine 100, the cutting machine 100 can grasp the cutting program PG1, the material error usage 173, the tool error usage 174, the spindle error rotation time 175, and the error operation time 176 at occurrence of the errors. Therefore, respective values of the material error cost 203, the tool error cost 204, the spindle error cost 205, and the personnel error cost 206 calculated based on the material error usage 173, the tool error usage 174, the spindle error rotation time 175, and the error operation time 176 at occurrence of the error are more accurate. Accordingly, the total error cost 208 at execution of the error program PG2 can be more accurately calculated based on the material error cost 203, the tool error cost 204, the spindle error cost 205, and the personnel error cost 206 calculated in the above described manner.

In this embodiment, the cutting program sales 180 that is total sales for one or more objects produced by executing the cutting program PG1 is stored in the management storage 130. As illustrated in FIG. 8, the profit calculator 146 calculates the cutting program profits 199 that are profits at execution of the cutting program PG1 from the cutting program sales 180 stored in the management storage 130 and the total cost 198 calculated by the total cost calculator 145. In this embodiment, one or more objects are produced by executing the cutting program PG1. Therefore, profits are calculated for each cutting program PG1, and thereby, the profits can be easily managed.

In this embodiment, the profit calculator 146 calculates the periodic profits 211 (see FIG. 10) in the cutting program PG1 executed in the predetermined period T1 from the cutting history table T11, based on the cutting date and time 161 in the cutting history table T11. The total error cost calculator 155 calculates the periodic error cost 212 (see FIG. 10) in the error program PG2 executed in the predetermined period T1 from the error history table T12, based on the error date and time 171 of the error history table T12. As illustrated in FIG. 10, the total profit calculator 157 calculates the total periodic profits 215 in the predetermined period T1 by subtracting the periodic error cost 212 from the periodic profits 211. The predetermined period T1 is one day, one week, one month, or the like. Thus, the total periodic profits 215 in a designated period can be known by designating the predetermined period T1. Therefore, the total periodic profits 215 in a period, the profits of which the user desires to know, can be easily known.

In this embodiment, the display controller 158 displays the total periodic profits 215 calculated by the total profit calculator 157 on the display screen 121. Thus, the user can visually grasp the total periodic profits 215 by viewing the display screen 121.

In this embodiment, as illustrated in FIG. 11, the display controller 158 displays, on the display screen 121, whether the total periodic profits 215 for one day exceeds the daily profit target 217. Thus, the user can easily grasp whether the total periodic profits 215 for one day exceeds the daily profit target 217 by viewing the display screen 121.

In this embodiment, as illustrated in FIG. 1, the plurality of cutting machines 100 is connected to the cost managing device 120. Thus, the costs and the profits for the plurality of cutting machines 100 can be collectively managed. Therefore, the costs and the profits for the plurality of cutting machines 100 can be easily managed.

In the above described embodiment, the cost managing device 120 is communicably connected to the plurality of cutting machines 100. Among companies that introduce the cutting system 1, some have a plurality of business bases in different locations. In this case, there is a probability that one or more cutting machines 100 are introduced in each of the business bases. Therefore, the cost managing device 120 may be configured to calculate a total cost and total periodic profits for each business base and display the total cost and the total periodic profits on the display screen 121 for each business base.

## Claims

1. A cutting system (1) comprising:
a cutting machine (100) configured to cut a workpiece (5), based on a cutting program (PG1) designated in advance; and
a cost managing device (120) configured or programmed to manage a cost spent when the cutting machine (100) executes the cutting program (PG1),
wherein the cutting machine (100) includes
a tool gripper (32) configured to grip a processing tool (8),
a spindle (31) provided in the tool gripper (32) and configured to rotate the tool gripper (32),
a supporting mechanism (16) configured to support the workpiece (5), and
a controller (60),
the controller (60) includes
a tool usage measurement controller (63) configured or programmed to measure a tool usage (164) of the processing tool (8) gripped by the tool gripper (32) at execution of the cutting program (PG1),
a rotation time measurement controller (65) configured or programmed to measure a spindle rotation time (165) of the spindle (31) at execution of the cutting program (PG1), and
a transmitter (69) configured or programmed to transmit the tool usage (164) and the spindle rotation time (165) to the cost managing device (120),
a material usage (163) of the workpiece (5) used in execution of the cutting program (PG1) is set in the cutting program (PG1),
the cost managing device (120) includes a management controller (123), and
the management controller (123) includes
a receiver (135) configured or programmed to receive the tool usage (164) and the spindle rotation time (165) transmitted by the transmitter (69),
a time acquirer (136) configured or programmed to acquire an operation time (166) of a user, which has been set for each cutting program (PG1) executed by the cutting machine (100),
a first cost calculator (141) configured or programmed to calculate a material cost (193) at execution of the cutting program (PG1), based on the material usage (163) set in the cutting program (PG1),
a second cost calculator (142) configured or programmed to calculate a tool cost (194) at execution of the cutting program (PG1), based on the tool usage (164) received by the receiver (135),
a third cost calculator (143) configured or programmed to calculate a spindle cost (195) at execution of the cutting program (PG1), based on the spindle rotation time (165) received by the receiver (135),
a fourth cost calculator (144) configured or programmed to calculate a personnel cost (196) at execution of the cutting program (PG1), based on the operation time (166) acquired by the time acquirer (136), and
a total cost calculator (145) configured or programmed to calculate a total cost (198) at execution of the cutting program (PG1), based on the material cost (193), the tool cost (194), the spindle cost (195), and the personnel cost (196).

2. The cutting system (1) according to claim 1,
wherein, when the cutting program (PG1) executed at occurrence of an error in the cutting machine (100) is an error program (PG2),
the tool usage measurement controller (63) measures a tool error usage (174) that is a usage of the processing tool (8) gripped by the tool gripper (32) at execution of the error program (PG2),
the transmitter (69) transmits the tool error usage (174),
the receiver (135) receives the tool error usage (174), and
the management controller (123) includes
a first error cost calculator (151) configured or programmed to calculate a material error cost (203) at execution of the error program (PG2), based on a material error usage (173) that is the material usage (163) set in the error program (PG2),
a second error cost calculator (152) configured or programmed to calculate a tool error cost (204) at execution of the error program (PG2), based on the tool error usage (174) received by the receiver (135), and
a total error cost calculator (155) configured or programmed to calculate a total error cost (208) at execution of the error program (PG2), based on the material error cost (203) and the tool error cost (204).

3. The cutting system (1) according to claim 2,
wherein the rotation time measurement controller (65) measures a spindle error rotation time (175) that is a rotation time of the spindle (31) at execution of the error program (PG2),
the transmitter (69) transmits the spindle error rotation time (175),
the receiver (135) receives the spindle error rotation time (175),
the management controller (123) includes a third error cost calculator (153) configured or programmed to calculate a spindle error cost (205) at execution of the error program (PG2), based on the spindle error rotation time (175) received by the receiver (135), and
the total error cost calculator (155) calculates the total error cost (208), based on at least the material error cost (203), the tool error cost (204), and the spindle error cost (205).

4. The cutting system (1) according to claim 2 or 3,
wherein the time acquirer (136) acquires an error operation time (176) of the user, which has been set for each error program (PG2) executed by the cutting machine (100),
the management controller (123) includes a fourth error cost calculator (154) configured or programmed to calculate a personnel error cost (206) at execution of the error program (PG2), based on the error operation time (176) acquired by the time acquirer (136), and
the total error cost calculator (155) calculates the total error cost (208), based on at least the material error cost (203), the tool error cost (204), and the personnel error cost (206).

5. The cutting system (1) according to any one of claims 2 to 4,
wherein the management controller (123) includes
a first management storage (130) in which cutting program sales (180) that is a total of sales for one or more objects produced by executing the cutting program (PG1) is stored, and
a profit calculator (146) configured or programmed to calculate the cutting program profits (199) that are profits at execution of the cutting program (PG1) from the cutting program sales (180) stored in the first management storage (130) and the total cost (198) calculated by the total cost calculator (145).

6. The cutting system (1) according to claim 5,
wherein the transmitter (69) transmits a cutting date and time (161) that is a date or a time of execution of the cutting program (PG1) and an error date and time (171) that is a date or a time of execution of the error program (PG2) to the cost managing device (120),
the receiver (135) receives the cutting date and time (161) and the error date and time (171),
the management controller (123) includes
a second management storage (130) in which a cutting history table (T11) in which the material usage (163), the tool usage (164), the spindle rotation time (165), the operation time (166), and the cutting date and time (161) are associated for each cutting program (PG1) is stored, and
a third management storage (130) in which an error history table (T12) in which the material error usage (173), the tool error usage (174), and the error date and time (171) are associated for each error program (PG2) is stored,
the profit calculator (146) calculates periodic profits (211) in the cutting program (PG1) executed in a predetermined period (T1) from the cutting history table (T11), based on the cutting date and time (161) of the cutting history table (T11),
the total error cost calculator (155) calculates a periodic error cost (212) in the error program (PG2) executed in the predetermined period (T1) from the error history table (T12), based on the error date and time (171) of the error history table (T12), and
the management controller (123) includes a total profit calculator (157) configured or programmed to calculate total periodic profits (215) in the predetermined period (T1) by subtracting the periodic error cost (212) from the periodic profits (211).

7. The cutting system (1) according to claim 6,
wherein the cost managing device (120) includes a display screen (121), and the management controller (123) includes a display controller (158) configured or programmed to display the total periodic profits (215) calculated by the total profit calculator (157) on the display screen (121).

8. The cutting system (1) according to claim 7,
wherein the management controller (123) includes a fourth management storage (130) in which a profit target (217) for the predetermined period (T1) is stored, and
the display controller (158) displays, on the display screen (121), whether the total periodic profits (215) exceed the profit target (217).

9. The cutting system (1) according to any one of claims 1 to 8,
wherein the management controller (123) includes a fifth management storage (130) in which a unit material cost (183) that is a material cost per predetermined unit of a material usage, a unit tool cost (184) that is a tool cost per predetermined unit of a tool usage, a unit spindle cost (185) that is a spindle cost per predetermined unit of a spindle rotation time, and a unit personnel cost (186) that is a personnel cost per predetermined unit of an operation time are stored,
the first cost calculator (141) calculates the material cost (193) from the material usage (163) and the unit material cost (183),
the second cost calculator (142) calculates the tool cost (194) from the tool usage (164) and the unit tool cost (184),
the third cost calculator (143) calculates the spindle cost (195) from the spindle rotation time (165) and the unit spindle cost (185), and
the fourth cost calculator (144) calculates the personnel cost (196) from the operation time (166) and the unit personnel cost (186).

10. The cutting system (1) according to claim 9,
wherein the first cost calculator (141) calculates the material cost (193) by multiplying the material usage (163) and the unit material cost (183) together,
the second cost calculator (142) calculates the tool cost (194) by multiplying the tool usage (164) and the unit tool cost (184) together,
the third cost calculator (143) calculates the spindle cost (195) by multiplying the spindle rotation time (165) and the unit spindle cost (185) together, and
the fourth cost calculator (144) calculates the personnel cost (196) by multiplying the operation time (166) and the unit personnel cost (186) together.

11. The cutting system (1) according to any one of claims 1 to 10,
wherein the number of the cutting machines (100) is at least two or more.
